(19) Europäisches Patentamt
European Patent Office
Office européen des brevets

(11) EP 3 216 515 B1

(12) **EUROPEAN PATENT SPECIFICATION**

(45) Date of publication and mention of the grant of the patent:
**25.03.2020 Bulletin 2020/13**

(21) Application number: **15856904.6**

(22) Date of filing: **04.11.2015**

(51) Int Cl.:
***B01D 69/08*** (2006.01) ***B01D 71/44*** (2006.01)
***B01D 71/68*** (2006.01) ***D01F 6/76*** (2006.01)
***B01D 67/00*** (2006.01) ***B01D 69/02*** (2006.01)
***B01D 69/14*** (2006.01)

(86) International application number:
**PCT/JP2015/081000**

(87) International publication number:
**WO 2016/072409 (12.05.2016 Gazette 2016/19)**

(54) **HOLLOW FIBER FILTRATION MEMBRANE**

HOHLFASERFILTRIERMEMBRAN

MEMBRANE DE FILTRATION À FIBRES CREUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2014 JP 2014224193**

(43) Date of publication of application:
**13.09.2017 Bulletin 2017/37**

(73) Proprietor: **Asahi Kasei Medical Co., Ltd.**
**Tokyo 100-0006 (JP)**

(72) Inventors:
- **KOMURO, Masayasu**
  **Tokyo 101-8101 (JP)**
- **SHIRAISHI, Mitsugu**
  **Tokyo 101-8101 (JP)**
- **KAYAMA, Yuzo**
  **Tokyo 101-8101 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 1 795 254** **WO-A1-2010/035793**
**WO-A1-2013/012024** **WO-A1-2014/077095**
**JP-A- H05 317 664** **JP-A- H10 180 058**
**JP-A- 2004 525 755** **JP-A- 2005 342 093**
**JP-A- 2005 342 139** **JP-A- 2012 019 890**

- **D. RANA ET AL: "Surface Modifications for Antifouling Membranes", CHEMICAL REVIEWS, vol. 110, no. 4, 14 April 2010 (2010-04-14), pages 2448-2471, XP055131958, ISSN: 0009-2665, DOI: 10.1021/cr800208y**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 216 515 B1

## Description

### Technical Field

The present invention relates to a hollow fiber filtration membrane.

### Background Art

A hollow fiber membrane intended for the filtration treatment of a solution containing a solution of a physiologically active substance such as a protein is widely utilized in industrial applications such as microfiltration and ultrafiltration and medical applications such as hemodiafiltration. Particularly in recent years, a technique which achieves both safety and productivity in which pathogenic substances such as viruses are removed from a protein-containing solution and the protein is efficiently filtered and recovered in a purification step for a biopharmaceutical or a plasma fraction has been required.

In addition, virus removal and inactivation methods include heat treatment, optical treatment, and chemical medicine treatment, and in terms of problems such as protein denaturation, efficiency of inactivating viruses, and contamination of chemicals, a membrane filtration method effective for all viruses regardless of the thermal and chemical properties of viruses attracts attention. The types of viruses include parvovirus having a diameter of 18 to 24 nm and poliovirus having a diameter of 25 to 30 nm as the smallest ones and the HIV virus having a diameter of 80 to 100 nm as a relatively large one. In recent years, particularly the need for the removal of small viruses such as parvovirus has increased.

On the other hand, not only virus removal performance but the efficient recovery of a protein such as a 5 nm-sized albumin or a 10 nm-sized globulin from the viewpoint of productivity is required of a virus removal membrane used in a purification step for a plasma fraction or a biopharmaceutical. Therefore, an ultrafiltration membrane and a hemodialysis membrane having a pore diameter of about several nm, and a reverse osmosis membrane and the like having a smaller pore diameter are not suited as virus removal membranes because a protein clogs the pores during filtration. Particularly, when the removal of small viruses such as parvovirus is intended, it is difficult to achieve both virus removal performance and the efficient protein recovery.

In addition, a contaminant such as an aggregate of a protein is always present in a protein solution to be filtered using a membrane intended for the purification of a preparation. This contaminant clogs the pores during filtration, and therefore when filtration is performed under a condition in which a large amount of the contaminant is present, it is more difficult to achieve both virus removal performance and the efficient protein recovery.

Patent Literature 1 discloses a virus removal method using a hollow fiber membrane comprising regenerated cellulose.

Patent Literature 2 discloses a virus removal membrane in which the surface of a hollow fiber membrane comprising polyvinylidene fluoride (PVDF) formed by a thermally induced phase separation method is hydrophilized by a graft polymerization method.

In addition, Patent Literature 3 discloses a method for suppressing a decrease in the filtration performance of a virus removal membrane over time by connecting a membrane having a nominal pore diameter of 0.22 $\mu$m modified so that the surface has a negative charge in series to the portion of the virus removal membrane upstream of filtration to adsorb a protein aggregate that is a contaminant on this membrane having a negative charge.

In addition, Patent Literature 4 discloses a virus removal membrane in which by coating with a polysaccharide derivative a hollow fiber membrane formed from a state of a blend of a polysulfone-based polymer and a copolymer of vinylpyrrolidone and vinyl acetate, the elution of the copolymer of vinylpyrrolidone and vinyl acetate from the hollow fiber membrane is suppressed. In addition, the amount of filtration until the filtration pressure reaches 3 bar when an immunoglobulin solution is subjected to constant rate filtration at 120 L/(L·$m^2$·bar) is disclosed. Also WO2013/012024 discloses asymmetric hollow fibre membranes with a homogeneous distribution of hydrophilic polymer throughout the cross-section.

### Citation List

#### Patent Literature

Patent Literature 1: Japanese Patent No. 4024041
Patent Literature 2: International Publication No. WO 2003/026779
Patent Literature 3: International Publication No. WO 2010/098867
Patent Literature 4: Japanese Patent No. 5403444

Summary of Invention

Technical Problem

The hollow fiber membranes described in Patent Literatures 1 and 2 are characterized in that they have a thick virus capturing region in the central portion in the membrane thickness direction and can capture a large amount of a contaminant and therefore do not cause permeation rate (Flux) decrease over time during filtration. But, the cellulose membrane described in Patent Literature 1 has low strength in a state of being wet with water, and therefore it is difficult to set filtration pressure high, a high Flux cannot be obtained, and highly efficient protein recovery is difficult.
The PVDF membrane described in Patent Literature 2 is formed by a thermally induced phase separation method. In the thermally induced phase separation method, it is difficult to make a gradient asymmetric structure in which the pore diameter of pores changes in the membrane thickness direction, and generally a homogeneous structure membrane is provided. Therefore, compared with a membrane having a gradient asymmetric structure, a high Flux cannot be obtained.
The membrane having a negative charge described in Patent Literature 3 adsorbs not only an aggregate of a protein but also a monomer that is a useful component and therefore also has the demerit of decreasing the useful component recovery rate. In addition, when a salt is present in a protein solution, the aggregate adsorption ability decreases, and therefore it is difficult to suppress a decrease in the filtration performance of the virus removal membrane over time in the presence of a salt.
In addition, in Patent Literature 4, the clogging resistance of the membrane evaluated from pressure change when a protein solution is subjected to constant rate filtration is described, but an increase in pressure during constant rate filtration means that clogging is substantially caused. Therefore, it is suggested that when a protein solution containing a contaminant is treated, clogging occurs, and the filtration performance decreases.
A problem to be solved by the present invention is to provide a hollow fiber filtration membrane in which even when a relatively small contaminant having a size close to that of an effective component which should pass through the filtration membrane, such as a protein aggregate, is present in a filtration solution, Flux decrease over time during filtration is suppressed, and a useful component can be efficiently recovered.
The present inventors have studied diligently in order to solve the above problem, and as a result found that the above problem is solved by setting the content of the hydrophilic polymer of a hollow fiber membrane lower at its inner surface portion than in other portions, and completed the present invention.
Specifically, the present invention is as follows.

[1] A hollow fiber filtration membrane comprising a polysulfone-based polymer and a hydrophilic polymer and having a large number of pores,
wherein

the hollow fiber filtration membrane has a gradient asymmetric porous structure in which an average pore diameter of the pores increases from an outer surface portion toward an inner surface portion of the membrane,
a content of the hydrophilic polymer of the membrane is from 6.0 to 10.0% by mass, and
a ratio between a content of the hydrophilic polymer at the inner surface portion and the content of the hydrophilic polymer of the membrane is in the range of from 0.50 to 0.80.

[2] The hollow fiber filtration membrane according to [1], wherein a content of the hydrophilic polymer at the outer surface portion is higher than the content of the hydrophilic polymer of the membrane.
[3] The hollow fiber filtration membrane according to [1] or [2], wherein the the hollow fiber filtration membrane has a pure water permeation rate of from 80 to 240 L/(hr·$m^2$·bar).
[4] The hollow fiber filtration membrane according to any one of [1] to [3], wherein the hollow fiber filtration membrane has a dense layer having a thickness of from 2 to 10 $\mu$m.
[5] The hollow fiber filtration membrane according to any one of [1] to [4], wherein the polysulfone-based polymer is polyethersulfone.
[6] The hollow fiber filtration membrane according to any one of [1] to [5], wherein the hydrophilic polymer is a copolymer comprising a vinylpyrrolidone unit.

Advantageous Effect of Invention

When the hollow fiber filtration membrane of the present invention is used, Flux decrease over time during filtration is less likely to occur even when a filtration solution comprising a contaminant such as an aggregate of a protein is filtered.

Therefore, the hollow fiber filtration membrane of the present invention is preferred as a membrane for removing pathogenic substances such as viruses from a protein solution in a purification step for a plasma fraction or a biopharmaceutical.

Brief Description of Drawing

[Figure 1] Figure 1 shows an example of the result of binarization for pore portions and solid portions in a cross-sectional image of a hollow fiber filtration membrane observed by a scanning electron microscope. The white portions are pore portions, and the black portions are solid portions.

Description of Embodiment

A mode for carrying out the present invention (hereinafter referred to as the present embodiment) will be described in detail below.

A hydrophilic hollow fiber filtration membrane of the present embodiment comprises a polysulfone-based polymer and a hydrophilic polymer.

The polysulfone-based polymer is a polymer having a sulfone group ($-SO_2-$) in its structure. Specific examples include polyarylethersulfone having a repeating unit represented by the following formula 1 and polyethersulfone having a repeating unit represented by the following formula 2. Particularly, polyethersulfone having a repeating unit represented by formula 2 is preferred.

Formula 1:

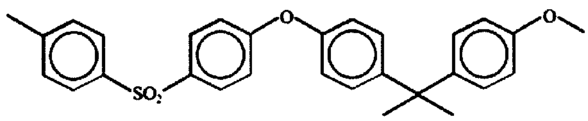

Formula 2:

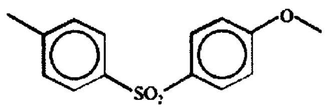

In the structures of formula 1 and formula 2, the aryl groups may comprise a substituent such as a functional group or an alkyl group, and the hydrogen atoms in the hydrocarbon skeleton may be replaced by other atoms such as halogens or substituents.

One polysulfone-based polymer may be used alone, or two or more polysulfone-based polymers may be mixed and used.

The hydrophilic polymer is not particularly limited as long as it is a polymer that exhibits hydrophilicity and is compatible with the polysulfone-based polymer. Copolymers containing a vinylpyrrolidone unit are preferred. As the copolymers containing a vinylpyrrolidone unit, polyvinylpyrrolidone and copolymers of vinylpyrrolidone and vinyl acetate are preferred from the viewpoint of compatibility with the polysulfone-based polymer. The copolymerization ratio between vinylpyrrolidone and vinyl acetate is preferably from 6:4 to 9:1 from the viewpoint of the adsorption of a protein on the membrane surface and interaction with the polysulfone-based polymer in the membrane. Specific examples of the copolymers of vinylpyrrolidone and vinyl acetate include LUVISKOL (trade name) VA64 and VA73 commercially available from BASF.

One hydrophilic polymer may be used alone, or two or more hydrophilic polymers may be mixed and used.

A hollow fiber filtration membrane of the present embodiment is a porous hollow fiber-like membrane having a large number of pores and has a gradient asymmetric porous structure in which the average pore diameter of the pores increases from the outer surface portion toward the inner surface portion of the hollow fiber filtration membrane.

The Flux of the membrane is governed by the thickness of a region in the membrane where the pore diameter is small (dense layer) and the diameter of the pore therein. Therefore, when the dense layer is clogged, the Flux decreases. When the average pore diameter of the pores decreases from the upstream side of filtration toward the downstream side of filtration, large particles can be captured upstream of filtration, and the clogging of the dense layer

due to large particles is reduced, and a decrease in Flux can be suppressed.

In the present embodiment, the inner surface portion refers to a portion of the membrane in a range of up to 5 μm in the membrane thickness direction from the inner surface of the membrane (the hollow portion side surface of the hollow fiber membrane) toward the outer surface (the membrane surface opposite to the hollow portion surface in the membrane thickness direction). In addition, the outer surface portion refers to a portion of the membrane in a range of up to 5 μm in the membrane thickness direction from the outer surface toward the inner surface of the membrane.

Whether or not the hollow fiber filtration membrane has a gradient asymmetric porous structure in which the average pore diameter of the pores increases from the outer surface portion toward the inner surface portion is determined by photographing a cross-section of the hollow fiber by a scanning electron microscope (SEM). For example, the photographing magnification is set at 50,000x, and the field of view is set on a cross-section perpendicular to the length direction of the hollow fiber or a cross-section parallel to the length direction and passing through the center of the hollow portion, horizontally to the cross-section. After photographing the initially set field of view, the photographing field of view is moved horizontally in the membrane thickness direction, and the next field of view is photographed.

This photographing operation is repeated until photographs of the cross-section of the membrane crossing from the outer surface to the inner surface are taken without a gap, and the obtained photographs are combined to obtain one membrane cross-section photograph. In this cross-section photograph, the average pore diameter of the pores in each area of (2 μm in the circumferential direction of the membrane) × (1 μm from the outer surface toward the inner surface side) from the outer surface toward the inner surface side is calculated, and the gradient structure of the membrane cross-section is quantified for each 1 μm from the outer surface toward the inner surface side.

By such quantification, it can be determined as to whether or not the hollow fiber filtration membrane has a gradient-type porous structure in which the average pore diameter of the pores increases from the outer surface portion toward the inner surface portion.

The average pore diameter can be calculated by a method using image analysis. Specifically, binarization processing for pore portions and solid portions is performed using Image-pro plus manufactured by Media Cybernetics, Inc. The identification between a pore portion and a solid portion is based on their brightness, and a portion that cannot be identified and a noise are corrected by a free hand tool. An edge portion forming the outline of a pore portion, and a porous structure observed behind a pore portion are identified as pore portions. After the binarization processing, the diameter of a pore is calculated from the area value of the pore assuming that the pore is a perfect circle. The calculation is carried out for each of all pores, and the average pore diameter is calculated for each area of 1 μm × 2 μm. A pore portion that is located at the end of the field of view and is partially in the field of view is also counted (i.e. its diameter is calculated assuming that the area of a pore portion partially in the field of view is the area of one whole perfect circle).

In the present embodiment, an area of 1 μm × 2 μm having a calculated average pore diameter of 50 nm or less is determined to be the dense layer.

For a hydrophilic hollow fiber filtration membrane used in a purification step for a plasma fraction or a biopharmaceutical, viruses and the like are also included in the substances to be removed in addition to large particles captured by pores having a large pore diameter located at upstream of filtration as described above, and the size of the smallest virus, parvovirus, is about 20 nm. On the other hand, the molecule size of a protein such as an immunoglobulin that is the main substance to be filtered is about 10 nm. Therefore, in such an application, the dense layer is generally designed to capture 20 nm-sized viruses and allow a 10 nm-sized protein to pass.

But, in a solution of a protein such as an immunoglobulin, which is a solution to be filtered, a contaminant such as an aggregate of the protein (immunoglobulin or the like) is also contained. This contaminant is contained in an amount larger than that of viruses, and its size is about 20 to 40 nm. Therefore, the pores of the dense layer may be clogged with this contaminant.

The permeation rate, Flux, of a solution is governed by a rate at which the solution penetrates the dense layer that is a region in which the pore diameter is the smallest in the membrane, and therefore when the pores are clogged in the dense layer, the Flux decreases over time during filtration. In fact, it is empirically known that when the amount of a contaminant in a protein solution increases even slightly, the Flux decreases significantly. In this manner, for the filtration of a protein solution, the fact that the pores of the dense layer are clogged with a contaminant having a size of about 20 to 40 nm is considered to be the main cause of Flux decrease over time.

In addition, the clogging of the pores of the dense layer with a contaminant causes not only Flux decrease but also a decrease in virus removal ability because when the pores of the dense layer are clogged with a contaminant, the number of the pores that can capture viruses decrease, and the virus capture capacity in the dense layer decreases.

Therefore, it is preferred that, by suppressing the clogging of the pores in the dense layer during protein solution filtration to suppress a decrease in Flux over time during filtration and a decrease in virus removal ability, a protein monomer, which is a useful component, is efficiently recovered.

In order to suppress the clogging of the pores in the dense layer with a contaminant, it is important that the contaminant is not allowed to permeate the dense layer. For this purpose, the contaminant should be captured on the upstream side of filtration before the solution penetrates the dense layer.

The present inventors have studied diligently and as a result found that such capture of a contaminant on the upstream side of filtration can be achieved by decreasing the content of the hydrophilic polymer of the hollow fiber filtration membrane on the upstream side of filtration to adsorb the contaminant on the upstream side of filtration.

Specifically, it has been found that when the ratio between "the content of the hydrophilic polymer at the inner surface portion" and "the content of the hydrophilic polymer of the membrane" ("the content of the hydrophilic polymer at the inner surface portion"/"the content of the hydrophilic polymer of the membrane") of the hollow fiber filtration membrane is in the range of from 0.50 to 0.80, the contaminant is adsorbed and captured by the membrane on the upstream side of filtration.

The detailed mechanism of this is unclear, but it is considered that, in an aggregate of a protein, which is the main contaminant, monomers are aggregated with each other by hydrophobic interaction or electrostatic interaction, and the aggregate has a more unstable structure than the monomer, and therefore when the aggregate comes into contact with the surfaces of pores having an insufficient degree of hydrophilization, it is more likely to be adsorbed on the surfaces of the pores than the monomer.

The value of "the content of the hydrophilic polymer at the inner surface portion"/"the content of the hydrophilic polymer of the membrane" is more preferably in the range of from 0.55 to 0.75, further preferably in the range of from 0.6 to 0.7.

Further, in order to suppress the clogging of the pores in the dense layer, it is also effective to suppress the adsorption of a contaminant (an aggregate of a protein) in the pores of the dense layer. Therefore, the pore surfaces in the dense layer are preferably sufficiently hydrophilized. Therefore, the content of the hydrophilic polymer at the outer surface portion where the dense layer is present is preferably higher than the content of the hydrophilic polymer of the membrane. In other words, the value of "the content of the hydrophilic polymer at the outer surface portion"/"the content of the hydrophilic polymer of the membrane" is preferably more than 1.0.

Here, "the content of the hydrophilic polymer" refers to the amount of the hydrophilic polymer with respect to the amount of the polysulfone-based polymer and specifically refers to the peak area ratio between a peak derived from the polysulfone-based polymer (1580 $cm^{-1}$) and a peak derived from the hydrophilic polymer (for example, around 1730 $cm^{-1}$ for a hydrophilic polymer having a carbonyl bond, and, around 1100 $cm^{-1}$ for a hydrophilic polymer having an ether bond) (the peak area of a peak derived from the hydrophilic polymer/the peak area of a peak derived from the polysulfone-based polymer (1580 $cm^{-1}$)) in an infrared absorption spectrum measured by Fourier transform infrared spectroscopy (FT-IR).

The content of the hydrophilic polymer on the upstream side of filtration, that is, at the inner surface portion, of the hollow fiber filtration membrane, the content of the hydrophilic polymer on the downstream side of filtration, that is, at the outer surface portion, of the hollow fiber filtration membrane, and the content of the hydrophilic polymer of the membrane can be measured by the following method.

The hollow fiber membrane is cut twice perpendicularly to its length direction or parallel to its length direction across a plane passing through the center of the hollow portion to obtain a portion having a thickness of 10 $\mu$m. The cut out portion of the hollow fiber membrane is sandwiched between potassium bromide (KBr) plates, and an infrared absorption spectrum is continuously measured in the membrane thickness direction from the inner surface side to the outer surface side by a transmission method by microscopic FT-IR setting an area of $5 \times 5$ $\mu$m as one segment. From the measured spectrum, a peak derived from the polysulfone-based polymer (around 1580 $cm^{-1}$) and a peak derived from the hydrophilic polymer (for example, around 1730 $cm^{-1}$ for a hydrophilic polymer having a carbonyl bond, and, around 1100 $cm^{-1}$ for a hydrophilic polymer having an ether bond) are detected, and from the ratio of the absorbance area of the peak derived from the hydrophilic polymer/the absorbance area of the peak derived from the polysulfone-based polymer, the content of the hydrophilic polymer in each divided segment is calculated.

The average value of the contents of the hydrophilic polymer in all segments calculated as described above is determined as "the content of the hydrophilic polymer of the membrane."

The content of the hydrophilic polymer in the segment on the inner surface side (innermost side) is determined as "the content of the hydrophilic polymer at the inner surface portion," and the content of the hydrophilic polymer in the segment on the outer surface side (outermost side) is determined as "the content of the hydrophilic polymer at the outer surface portion."

There is also a suitable range for the content of the hydrophilic polymer of the membrane. When this content is too high, the pore diameter of the pores tends to be too small, and the Flux may decrease. When this content is too low, even a monomer is adsorbed on the surfaces of the pores, which may cause Flux decrease over time during filtration. From the viewpoint of suitably controlling the pore diameter of the pores of the hydrophilic hollow fiber filtration membrane to suppress the adsorption of a monomer, the content of the hydrophilic polymer of the membrane is from 6.0 to 10.0% by mass, preferably from 6.5 to 9.5% by mass, and more preferably from 7.0 to 9.0% by mass.

In order to efficiently recover a useful component in the presence of a contaminant, the capture of the contaminant in the portion upstream of filtration is important, but operation at high filtration pressure is also important because by setting filtration pressure high, the Flux can be increased. The operation at high filtration pressure is achieved by using

a polysulfone-based polymer having pressure resistance for the base material of the filtration membrane.

In order to further improve the permeability of a useful component, it is also preferred that the pure water permeation rate (the amount of permeated water) is increased. The pure water permeation rate can be a guide for the Flux of a filtration solution such as a protein solution. For example, the viscosity of a protein solution is higher than that of pure water, and therefore the permeation rate of the protein solution is lower than the pure water permeation rate, but as the pure water permeation rate increases, the filtration rate of the protein solution increases.

The pure water permeation rate through the hydrophilic hollow fiber filtration membrane of the present embodiment is preferably from 80 to 240 L/(hr·$m^2$·bar). When the pure water permeation rate is 80 L/(hr·$m^2$·bar) or more, the filtration time is not too long, and a protein can be recovered with high efficiency. In addition, when the pure water permeation rate is 240 L/(hr·$m^2$·bar) or less, it is considered that the pore diameter is a size suitable for virus removal. The pure water permeation rate is more preferably from 180 to 230 L/(hr·$m^2$·bar).

The pure water permeation rate can be measured by a method described in Examples.

The virus removal mechanism in the porous hollow fiber filtration membrane of the present embodiment is considered as follows.

When a solution comprising viruses permeate the porous membrane, it can be considered as if this solution permeates a virus removal layer consisting of many virus capture planes laminated perpendicular to the permeation direction. There is always a distribution of the size of the pores in this plane, and viruses are captured in the pores having smaller sizes than the sizes of the viruses. At this time, the virus capture rate in one plane is low, but high virus removal performance is achieved by laminating many of these planes. For example, even if the virus capture rate in one plane is 20%, the virus capture rate as a whole is 99.999% by laminating 50 of these planes.

As described above, it is considered that in a membrane for virus removal, viruses are captured by multiple layers. Therefore, in order to increase virus capture ability, the dense layer (a portion having a calculated average pore diameter of 50 nm or less) is preferably thick. But, when the dense layer is too thick, the Flux when a protein solution is filtered decreases, and therefore the thickness of the dense layer is preferably from 2 to 10 $\mu$m.

In order to evaluate filtration performance when a protein solution comprising a contaminant is filtered, the conditions for filtering the protein solution comprising a contaminant must be set. The conditions of the filtration of a protein solution depend on the application, type, and concentration of the protein, and the like, and are therefore difficult to be generally set. However, as a protein to be filtered, it is appropriate to select an immunoglobulin that is the main substance to be filtered in a purification step for a plasma fraction or a biopharmaceutical.

As the concentration of the immunoglobulin in filtration, a concentration of 1.5% by mass is preferred because the immunoglobulin concentration has tended to increase in recent years for the purpose of improving production efficiency. It is preferred that Venoglobulin (manufactured by Mitsubishi Tanabe Pharma Corporation) IH 5% I.V. (2.5 g/50 mL) containing about 5% of aggregates of dimers or higher multimers is used after dilution. As the filtration pressure, the filtration pressure is preferably 2.0 bar, since when the solution is filtered at high pressure, the Flux increases, and the immunoglobulin recovery efficiency improves, but when the pressure is too high, it is difficult to maintain the sealing properties of the connection portion between the filter and the piping.

In addition, in order to evaluate the suppression of Flux decrease over time during protein solution filtration even in the presence of a contaminant, a protein solution in which a contaminant is present is filtered, and the Flux change over time is evaluated. Generally, a virus removal step in a purification step for a plasma fraction or a biopharmaceutical is performed for 1 hour or more, and therefore the ratio between Flux immediately after the start of filtration and Flux 60 minutes after the start of filtration is used. In the present embodiment, the ratio between Flux 20 minutes after the start of filtration ($F_{20}$) and Flux 60 minutes after the start of filtration ($F_{60}$), $F_{60}/F_{20}$, is preferably 0.60 or more.

For the parvovirus clearance of the hollow fiber filtration membrane of the present embodiment, the logarithmic reduction value (LRV) is preferably 4.0 or more, more preferably 5.0 or more. As the parvovirus, porcine parvovirus (PPV) is preferred to be used because it can be found in a solution practically used and is easy to handle. The LRV of PPV can be measured by a method described in Examples.

Next, a method for manufacturing a hollow fiber filtration membrane of the present embodiment will be described.

In the present embodiment, the method for manufacturing a hollow fiber filtration membrane is not limited. One example includes a method of mixing a polysulfone-based polymer, a hydrophilic polymer, and a solvent for dissolution, degassing the solution to provide a dope, ejecting the dope together with a bore liquid (internal liquid) simultaneously from an annular portion and a central portion of a double-tube nozzle (spinneret) respectively, guiding the ejected product into a coagulation liquid after running it through an air gap portion to form a hollow fiber, and water-washing the hollow fiber, followed by winding, eliminating hollow fiber internal liquid, heat treating, and drying.

Specifically, a hollow fiber filtration membrane is preferably manufactured by a manufacturing method comprising the following steps.

A method for manufacturing a hollow fiber filtration membrane, comprising the steps of:

ejecting a dope comprising a sulfone-based polymer, a hydrophilic polymer, and a solvent and an bore liquid simultaneously from an annular portion and a central portion of a double-tube nozzle respectively;
guiding the product ejected in the above step into a coagulation liquid to form a hollow fiber membrane; and
pulling up the above hollow fiber membrane from the coagulation liquid, running the above hollow fiber membrane in the air, and then introducing the above hollow fiber membrane into a water washing bath, wherein
the air running time from pulling up the hollow fiber membrane from the coagulation bath to introducing it into the water washing bath is from 10 to 80 seconds.

The solvent used in the dope is not limited, and solvents which are good solvents for the polysulfone-based polymer and the hydrophilic polymer used and in which both of these are compatible, can be widely used. Specific examples include N-methyl-2-pyrrolidone (NMP), N,N-dimethylformamide (DMF), N,N-dimethylacetamide (DMAc), dimethyl sulfoxide, and ε-caprolactam. Among them, amide-based solvents such as NMP, DMF, and DMAc are preferred, and NMP is more preferred.

A nonsolvent is preferably added to the dope. As the nonsolvent used, for example, glycerin, water, and diol compounds are illustrated. Among them, those having an ethylene glycol structure are preferred.

The diol compounds are those having hydroxyl groups at both ends of the molecule, and those having an ethylene glycol structure are those which are represented by the following formula 3 wherein the repeating unit n is 1 or more.

Specific examples of the diol compounds include diethylene glycol (DEG), triethylene glycol (TriEG), tetraethylene glycol (TetraEG), and polyethylene glycol. DEG, TriEG, and TetraEG are preferred, and TriEG is more preferred.

Formula 3:

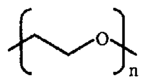

For the solvent/nonsolvent mass ratio in the dope, the amounts of both are preferably about the same, and from 35/65 to 65/35 is preferred. When the amount of the nonsolvent (the compounds other than the above-described solvent and solutes (i.e. the polysulfone-based polymer and the hydrophilic polymer), which are added to the dope) is 65/35 or more, coagulation proceeds at a moderate rate, and therefore an excessively large pore diameter is less likely to occur, and a filtration membrane having a membrane structure preferred as a filtration membrane for protein solution treatment applications is likely to be obtained. On the other hand, when the amount of the nonsolvent is 35/65 or less, the progress of coagulation is not too fast, and therefore an excessively small pore diameter is less likely to occur, and macrovoids that are structural defects are also less likely to occur, which are preferred.

The concentration of the polysulfone-based polymer in the dope is preferably from 15 to 35% by mass, more preferably from 20 to 30% by mass. When the polysulfone-based polymer concentration in the dope is decreased, high permeation performance is obtained by increasing porosity, but when the polysulfone-based polymer concentration is excessively low, a decrease in membrane strength and an increase in pore diameter may be caused. On the other hand, by setting the polysulfone-based polymer concentration at 35% by mass or less, the porosity is not too low, and not only can the permeation performance be maintained, but the virus capture capacity of the membrane can be kept high, which are preferred.

The concentration of the hydrophilic polymer in the dope is preferably from 5 to 12% by mass. When the hydrophilic polymer concentration is 5% by mass or more, the obtained membrane is sufficiently hydrophilized, which is preferred from the viewpoint that even when the membrane is used for physiologically active substance filtration, the physiologically active substance is less likely to be adsorbed on the membrane, and Flux decrease is less likely to occur. On the other hand, setting the hydrophilic polymer concentration at 12% by mass or less is preferred because the amount of the hydrophilic polymer on pore surfaces is in a suitable range in the obtained membrane, and the pore diameter does not decrease excessively due to the thickness of the hydrophilic polymer. In addition, setting the hydrophilic polymer concentration at 12% by mass or less is also preferred from the viewpoint of preventing hollow fibers from bonding to each other after drying.

The dope is obtained, for example, by dissolving a polysulfone-based polymer, a hydrophilic polymer and a nonsolvent in a solvent while stirring them at constant temperature. The temperature at this time is preferably from 30 to 60°C, higher than ordinary temperature. Tertiary and lower compounds containing nitrogen (NMP and vinylpyrrolidone) are oxidized in the air, and oxidation is likely to proceed further when they are heated, and therefore the preparation of the dope is preferably performed under an inert gas atmosphere. Examples of the inert gas include nitrogen and argon. From the viewpoint of production cost, nitrogen is preferred.

When bubbles are present in the dope, large bubbles cause fiber breakage during spinning, and small bubbles form macrovoids after membrane formation, which cause structural defects in the membrane, and therefore degassing is preferably performed. The degassing step can be performed, for example, as follows. A tank containing the dope in which the solutes are completely dissolved is heated to 50°C, the pressure is reduced to 2 kPa, and the dope is allowed to stand for 1 hour or more. This operation is preferably repeated seven times or more. In addition, in order to increase degassing efficiency, the solution may be stirred during degassing.

By using a material whose content of a foreign material is low, fiber breakage during spinning can be prevented, and the structure of the membrane can be controlled, and therefore a foreign material is preferably eliminated before the dope is ejected from the spinneret. Before the dope is ejected from the spinneret, a filter is preferably installed, and it is more preferred that filters having different pore diameters are installed in multiple stages. Although not particularly limited, specifically, it is preferred that a mesh filter having a pore diameter of 30 μm and a mesh filter having a pore diameter of 10 μm are installed in an order such that the mesh filter having a pore diameter of 30 μm is closer to the dope tank.

For the bore liquid used during membrane formation, the same components as the components used in the dope and the coagulation liquid are preferably used. When, for example, NMP/TriEG are used as the solvent/nonsolvent of the dope, and NMP/TriEG-water are used as the solvent/nonsolvent of the coagulation liquid, the bore liquid is preferably composed of NMP, TriEG, and water.

An increase in the amount of the solvent in the bore liquid is effective in slowing the progress of coagulation and allowing membrane structure formation to proceed slowly. An increase in the amount of the nonsolvent is effective, generally due to a thickening effect, in slowing the diffusion of the solution, slowing the progress of coagulation, and allowing membrane structure formation to proceed slowly. In addition, an increase in the amount of water is effective in accelerating the progress of coagulation. In order to allow the progress of coagulation to proceed suitably and control the membrane structure to obtain a preferred membrane structure, the solvent/nonsolvent mass ratio in the bore liquid is preferably from 35/65 to 65/35, and the amounts of both may be substantially about the same. The organic component/water mass ratio in the nonsolvent is preferably from 70/30 to 100/0.

The spinneret temperature is preferably from 40 to 60°C in order to obtain a suitable pore diameter. The dope is ejected from the spinneret and then introduced into a coagulation bath after running through an air gap portion. The amount of time for running through an air gap portion is preferably from 0.01 to 0.75 seconds, and more preferably from 0.05 to 0.4 seconds, from the viewpoint of controlling the progress of coagulation to provide a preferred membrane structure.

The draft ratio is preferably in the range of from 1.1 to 6.0, more preferably in the range of from 1.1 to 4.0, in order to control drawing into the hollow fiber membrane in the spinning process. The draft ratio means the ratio between a take-over speed and an ejection linear velocity of dope from the spinneret. A high draft ratio means that the draw ratio after ejection from the spinneret is high. Generally, when a membrane is formed by a wet phase separation method, most of the membrane structure is determined when the dope exits the coagulation bath after running through an air gap portion. The membrane interior is composed of solid portions formed by the entanglement of the polymer chains, and empty portions that are pore portions in which the polymers are not present. The detailed mechanism is unclear, but it is considered that when the hollow fiber membrane is excessively drawn before coagulation is completed, in other words, the hollow fiber membrane is excessively drawn before the polymer chains are entangled, the entanglement of the polymer chains is torn, and the pore portions are connected, and thus excessively large pores are formed, or the pore portions are divided, and thus excessively small pores are formed.

The coagulation liquid can be composed of a solvent of an organic component/a nonsolvent other than water, water, and a hydrophilic polymer. As described above, the solvent is effective in slowing coagulation, and water is effective in accelerating coagulation, and therefore for the coagulation liquid composition, it is preferred that the solvent/nonsolvent mass ratio is from 35/65 to 65/35, and the organic component/water mass ratio in the nonsolvent is from 70/30 to 10/90. In addition, the coagulation bath temperature is preferably from 30 to 60°C in order to obtain a suitable pore diameter.

The spinning rate is not particularly limited as long as it is a condition under which a hollow fiber membrane without defects is obtained. The spinning rate is preferably from 5 to 15 m/min.

The hollow fiber membrane pulled up from the coagulation bath runs in the air and is introduced into a water washing bath. The amount of time while the hollow fiber membrane runs in the air, from pulling up the hollow fiber membrane from the coagulation bath to introducing the hollow fiber membrane into the water washing bath, is usually about several seconds, but according to the study of the present inventors, it has been found that when this air running time is increased, the content of the hydrophilic polymer at the inner surface portion of the hollow fiber membrane can be decreased.

The mechanism is not clear but is considered as follows.

The good solvent for the polysulfone-based polymer and the hydrophilic polymer is present in the hollow portion of the hollow fiber membrane pulled up from the coagulation bath. Therefore, while the hollow fiber membrane pulled

up from the coagulation bath runs in the air, a state in which the inner surface side is in contact with the solution comprising the good solvent for the polysulfone-based polymer and the hydrophilic polymer, and the outer surface side is in contact with the air is provided.

It is considered that in this manner, while the hollow fiber membrane runs in the air, its inner surface side is in direct contact with the solution comprising the good solvent, and therefore the entanglement of the polysulfone-based polymer and the hydrophilic polymer weakens, and the hydrophilic polymer moves diffusively into the solvent in the hollow portion. On the other hand, it is considered that during this time, the outer surface side is in contact with the air, and therefore such movement of the hydrophilic polymer as occurs on the inner surface side is less likely to occur on the outer surface and at other portions.

When the retention time in the air, from pulling up the hollow fiber membrane from the coagulation bath to introducing it into the water washing bath, is too long, the content of the hydrophilic polymer at the inner surface portion is too low, and on the contrary, when this is too short, the content of the hydrophilic polymer at the inner surface portion is not sufficiently low, and therefore in order to set the content of the hydrophilic polymer at the inner surface portion in a suitable range, this retention time in the air is preferably from 10 to 80 seconds, more preferably from 15 to 80 seconds.

In addition, when this retention time is not too long, the content of the hydrophilic polymer at the outer surface portion can be higher than the content of the hydrophilic polymer of the membrane.

The hollow fiber membrane running in the air is introduced into the water washing bath and washed with warm water. It is preferred that in the water washing process, the solvent, and the hydrophilic polymer not fixed to the membrane are reliably eliminated. When the hollow fiber membrane is dried while comprising the solvent, the solvent is concentrated in the membrane during drying, and the polysulfone-based polymer dissolves or swells, and thus the membrane structure may be changed. When the hydrophilic polymer not fixed to the membrane remains, the pores are clogged, and the permeability of the membrane may be decreased. In order to increase the diffusion rates of the solvent, the nonsolvent and the hydrophilic polymer not fixed to the membrane that should be eliminated, and increase water washing efficiency, the temperature of the warm water is preferably from 50°C or more. In the water washing process, a Nelson roller is preferably used. In order to sufficiently perform water washing, the retention time of the hollow fiber membrane in the water washing bath is preferably from 80 to 300 seconds.

The hollow fiber membrane pulled up from the water washing bath is wound to a winding frame by a winder. The hollow fiber membrane wound to the winding frame is cut at both ends, bundled, and held by a support so as not to loosen. Then, the held hollow fiber membrane is immersed in hot water and washed in a hot water treatment process. A white-clouded liquid may remain in the hollow portion of the hollow fiber membrane in the state of being wound to the winding frame. Nanometer- to micrometer-sized particles of the polysulfone-based polymer are suspended in this liquid. When the hollow fiber membrane is dried without eliminating this white-clouded liquid, these fine particles clog the pores of the hollow fiber membrane, and the membrane performance may decrease, and therefore the internal liquid in the hollow portion is preferably eliminated. In the hot water treatment process, the hollow fiber membrane is also washed from the inside of the hollow fiber, and therefore the hydrophilic polymer not fixed to the membrane, and the like that cannot be completely eliminated in the water washing process are efficiently eliminated. The temperature of the hot water in the hot water treatment process is preferably from 50 to 100°C, and the washing time is preferably from 30 to 120 minutes. The hot water is preferably replaced several times during washing.

In the present embodiment, the wound hollow fiber membrane is preferably further subjected to high pressure hot water treatment. Specifically, the hollow fiber membrane is preferably placed in a highpressure steam sterilizer in a state of being completely immersed in water, and treated at 120°C or more for from 2 to 6 hours. The detailed mechanism is unclear, but it is considered that by this high pressure hot water treatment, not only slight amounts of the solvent, the nonsolvent and the hydrophilic polymer not fixed to the membrane remaining in the hollow fiber membrane are completely eliminated, but the state of the presence of the polysulfone-based polymer and the hydrophilic polymer is optimized (specifically, the hydrophilic polymer covers the pore surfaces to the extent that the pore diameter is not excessively decreased), and thus a structure preferred for a virus removal membrane is provided. When the hollow fiber membrane is treated at a temperature lower than 120°C or for a time shorter than from 2 to 6 hours, the optimization of the state of the presence of the polysulfone-based polymer and the hydrophilic polymer is likely to be insufficient, and sufficient permeation performance may not be obtained. In addition, the treatment time may be longer than the above, but this optimization is completed in a treatment time within 6 hours, and therefore in terms of production efficiency, the treatment time is preferably 6 hours or less.

The hollow fiber filtration membrane of the present embodiment is preferably dried by air drying, reduced pressure drying, hot air drying, or the like, though not particularly limited, in a state in which both ends of the hollow fiber membrane is fixed so that the membrane does not shrink during drying.

## Examples

The present embodiment will be described in detail below by Examples. The measurement methods in the

Examples are as follows.

(1) Inner Diameter Measurement and Membrane Thickness Measurement

The inner diameter and outer diameter of a hollow fiber membrane were determined by photographing a vertically cut cross-section of the membrane by a stereoscopic microscope. (The outer diameter - the inner diameter)/2 was calculated to obtain the membrane thickness. In addition, the membrane area was calculated from this inner diameter and hollow fiber length.

(2) Measurement of Pure Water Permeation Rate

The amount of pure water at 25°C filtered (L) by constant pressure dead end filtration at 1.0 bar was measured and divided by filtration time (hr) and membrane area ($m^2$) to determine the permeation rate (L/hr·$m^2$·bar).

(3) Immunoglobulin Filtration Test

A filter assembled so that the number of hollow fibers was 4, and the effective length of a hollow fiber membrane was 8 cm was subjected to high pressure sterilization treatment at 122°C for 60 minutes. Using Venoglobulin (manufactured by Mitsubishi Tanabe Pharma Corporation) IH 5% I.V. (2.5 g/50 mL), a solution was prepared so that the immunoglobulin concentration of the solution was 15 g/L, the sodium chloride concentration was 0.1 M, and the pH was 4.5. The prepared solution was filtered with a dead end method at a fixed pressure of 2.0 bars for 60 minutes. The filtrate was recovered at intervals of 10 minutes, and the Flux ratio of $F_{60}/F_{20}$, which is the ratio between the amount of the filtrate filtered from 10 minutes and recovered (mL) at 20 minutes and the amount of the filtrate filtered from 50 minutes and recovered (mL) at 60 minutes, was measured.

(4) Measurement of Contaminant Content in Filtration Solution for Testing

The Size Exclusion Chromatography measurement was performed for the solution prepared in (3) according to the descriptions in Seibutsu-kogaku Kaishi, Vol. 84, No. 10 (P392-394), under the same conditions. From each area value in the obtained chromatogram, the contaminant content in the filtration solution used in the immunoglobulin filtration test was determined.

The immunoglobulin monomer/aggregate abundance ratio in the solution used in the immunoglobulin filtration test was 94.8/5.2.

(5) Porcine Parvovirus Clearance Measurement

A solution obtained by spiking the solution prepared in Immunoglobulin Filtration Test (3) with a 0.5% by volume porcine parvovirus (PPV) solution was used as a filtration solution. A filtration test was performed in the same way as (3) Immunoglobulin Filtration Test. The Titer ($TCID_{50}$ value) of the filtrate was measured by virus assay. The PPV virus clearance (virus logarithmic reduction value (LRV)) was calculated by

$$LRV = \text{Log}\ (TCID_{50}/mL\ \text{(the filtration solution)}) - \text{Log}\ (TCID_{50}/mL\ \text{(the filtrate)}).$$

(6) Measurement of Average Pore Diameter of Pores

A hollow fiber membrane cross-section was photographed by a scanning electron microscope (SEM) with the photographing magnification set at 50,000x and the field of view set horizontally to the membrane thickness direction of the hollow fiber cross-section. After photographing the initially set field of view set, the photographing field of view was moved horizontally in the membrane thickness direction, and the next field of view was photographed. This photographing operation was repeated until photographs of the membrane cross-section of the membrane crossing from the outer surface to the inner surface were taken without any space, and the obtained photographs were combined to obtain one membrane cross-section photograph. In this cross-section photograph, the average pore diameter in each area of (2 μm in the circumferential direction of the membrane) × (1 μm from the outer surface toward the inner surface side) was calculated, and the gradient-structure of the membrane cross-section was quantified for each 1 μm from the outer surface toward the inner surface side.

The average pore diameter was calculated as follows. Using Image-pro plus manufactured by Media Cybemetics, a pore portion or a solid portion was identified based on their brightness, and a portion that could not be identified and a noise were corrected by a free hand tool, and an edge portion forming the outline of a pore portion, and a porous structure observed behind a pore portion were identified as pore portions to perform binarization processing for pore portions and solid portions. After the binarization processing, the diameter of a pore was calculated from the area value of the pore assuming that the pore was a perfect circle. A pore portion that is located at the end of the field of view and was partially in the field of view was also counted, the calculation was carried out for each of all pores, and the average pore diameter was calculated for each area of 2 $\mu$m $\times$ 1 $\mu$m.

An area having a calculated average pore diameter of 50 nm or less was determined to be a dense layer, and an area having a calculated average pore diameter of more than 50 nm was determined to be a coarse layer.

(7) Thickness of Dense Layer

The thickness of a dense layer was determined from the number of areas having an average pore diameter of 50 nm or less in (6) $\times$ 1 ($\mu$m).

(8) Measurement of "Content of Hydrophilic Polymer in Membrane" and Ratio between "Content of Hydrophilic Polymer at Inner Surface Portion" and "Content of Hydrophilic Polymer of the Membrane"

From a hollow fiber membrane, a thin film portion having a thickness of about 10 $\mu$m was cut out, sandwiched between two KBr plates, and molded into a tablet using a press. For the tablet, an infrared absorption spectrum for each segment was continuously measured in the membrane thickness direction from the inner surface side to the outer surface side using a FT-IR microscopic transmission method setting an area of 5 $\mu$m $\times$ 5 $\mu$m as one segment. From the measured spectrum, a peak derived from the polysulfone-based polymer (around 1580 $cm^{-1}$) and a peak derived from the hydrophilic polymer (around 1730 $cm^{-1}$) were detected, and from the ratio of the absorbance area of the peak derived from the hydrophilic polymer/the absorbance area of the peak derived from the polysulfone-based polymer, the content of the hydrophilic polymer in each divided segment was calculated.

Of the content of the hydrophilic polymer in the segments calculated as described above, the content of the hydrophilic polymer in the segment present on the innermost side (hollow portion side) was determined as "the content of the hydrophilic polymer at the inner surface portion", the content of the hydrophilic polymer in the segment on the outer surface side (outermost side) was determined as the content of the hydrophilic polymer at the outer surface portion, and the average value of the contents of the hydrophilic polymer in all segments was determined as "the content of the hydrophilic polymer of the membrane". Using these values, the ratio between "the content of the hydrophilic polymer at the inner surface portion" and "the content of the hydrophilic polymer of the membrane" and the ratio between "the content of the hydrophilic polymer at the outer surface portion" and "the content of the hydrophilic polymer of the membrane" were calculated.

(Example 1)

27 Parts by mass of polyethersulfone (PES) (Ultrason (trade name) E6020P manufactured by BASF), 9 parts by mass of a copolymer of vinylpyrrolidone and vinyl acetate (Luviskol (registered trademark) VA64 manufactured by BASF, hereinafter described as "VA"), 30.4 parts by mass of N-methyl-2-pyrrolidone (NMP) (manufactured by KISHIDA CHEMICAL Co., Ltd.), and 33.6 parts by mass of triethylene glycol (TriEG) (manufactured by KANTO CHEMICAL CO., INC.) were mixed at 50°C, and then reduced pressure degassing was repeated seven times to provide a solution as a dope.

The dope was ejected from the annular portion of a double-tube nozzle with the spinneret temperature set at 50°C, and a mixed liquid of 45.1 parts by mass of NMP, 49.9 parts by mass of TriEG, and 5 parts by mass of water as a bore liquid was ejected from the central portion. The ejected dope and bore liquid were allowed to run through an air gap portion and then run in a coagulation bath at 30°C filled with a coagulation liquid comprising 28.5 parts by mass of NMP, 31.5 parts by mass of TriEG, and 40 parts by mass of water.

The hollow fiber membrane pulled up from the coagulation bath was allowed to run in the air for 15 seconds, then allowed to run in a water washing bath set at 55°C, and finally wound in water. The spinning rate was 8 m/min, and the draft ratio was 2.

The wound hollow fiber membrane was cut at both ends, bundled, held by a support so as not to loosen, immersed in hot water at 80°C, and washed for 60 minutes. The washed hollow fiber membrane was subjected to high pressure hot water treatment under the conditions of 128°C and 6 hours and then vacuum-dried to obtain a porous hollow fiber filtration membrane.

(Example 2)

A hollow fiber membrane was obtained in the same way as Example 1 except that the air running time of the hollow fiber membrane after exiting the coagulation bath was changed to 30 seconds.

(Example 3)

A hollow fiber membrane was obtained in the same way as Example 1 except that the air running time of the hollow fiber membrane after exiting the coagulation bath was changed to 70 seconds.

(Example 4)

A hollow fiber membrane was obtained in the same way as Example 1 except that the coagulation liquid composition was changed to 19 parts by mass of NMP, 21 parts by mass of TriEG, and 60 parts by mass of water.

(Example 5)

A hollow fiber membrane was obtained in the same way as Example 1 except that the coagulation liquid composition was changed to 9.5 parts by mass of NMP and 10.5 parts by mass of TriEG.

(Example 6)

A hollow fiber membrane was obtained in the same way as Example 5 except that the dope composition was changed to 26 parts by mass of PES, 10 parts by mass of VA, 32 parts by mass of NMP, and 32 parts by mass of TriEG, and the bore liquid composition was changed to 42.8 parts by mass of NMP, 52.2 parts by mass of TriEG, and 5 parts by mass of water.

(Example 7)

A hollow fiber membrane was obtained in the same way as Example 1 except that the dope composition was changed to 24 parts by mass of PES, 12 parts by mass of VA, 30.4 parts by mass of NMP, and 33.6 parts by mass of TriEG, the bore liquid composition was changed to 52.8 parts by mass of NMP, 42.2 parts by mass of TriEG, and 5 parts by mass of water, and the coagulation liquid composition was changed to 38.9 parts by mass of NMP, 31.1 parts by mass of TriEG, and 30 parts by mass of water.

(Example 8)

A hollow fiber membrane was obtained in the same way as Example 1 except that the dope composition was changed to 27 parts by mass of PES, 8 parts by mass of VA, 30.9 parts by mass of NMP, and 34.1 parts by mass of TriEG.

(Example 9)

A hollow fiber membrane was obtained in the same way as Example 6 except that the dope composition was changed to 26 parts by mass of PES, 10 parts by mass of VA, 30.4 parts by mass of NMP, and 33.6 parts by mass of TriEG, the coagulation bath composition was changed to 38.3 parts by mass of NMP, 46.7 parts by mass of TriEG, and 15 parts by mass of water, the coagulation bath temperature was changed to 20°C, and the spinning rate was changed to 5 m/min.

The results of measurement for (1) to (8) for the hollow fiber membranes obtained in Examples 1 to 9 are shown in Table 1.

For all of the hollow fiber membranes obtained in Examples 1 to 9, the adsorption of the protein on the pore surfaces during filtration was suppressed, and the permeability of the protein was excellent. In addition, even in the presence of the contaminant, Flux decrease over time during protein solution filtration was suppressed, and the performance was excellent in permeability of the useful component.

(Comparative Example 1)

A hollow fiber membrane was obtained in the same way as Example 1 except that the air running time of the hollow fiber membrane after exiting the coagulation bath was changed to 3 seconds.

The results of measurement for (1) to (8) for the hollow fiber membrane obtained in Comparative Example 1 are shown in Table 1.

For the hollow fiber membrane obtained in Comparative Example 1, the air running time after it exited the coagulation bath was short, and therefore the content of the hydrophilic polymer on the inner surface side was not sufficiently low, and Flux decrease over time during protein solution filtration in the presence of the contaminant could not be suppressed.

(Comparative Example 2)

A hollow fiber membrane was obtained in the same way as Example 1 except that the air running time of the hollow fiber membrane after exiting the coagulation bath was changed to 110 seconds.

The results of measurement for (1) to (8) for the hollow fiber membrane obtained in Comparative Example 2 are shown in Table 1.

For the hollow fiber membrane obtained in Comparative Example 2, the air running time after it exited the coagulation bath was too long, and therefore the content of the hydrophilic polymer on the inner surface side decreased too much. As a result, not only the contaminant but even the monomer was adsorbed at upstream of filtration, and clogging occurred, and therefore Flux decrease over time occurred.

(Comparative Example 3)

A hollow fiber membrane was obtained in the same way as Example 6 except that the dope composition was changed to 26 parts by mass of PES, 12 parts by mass of VA, 29.5 parts by mass of NMP, and 32.5 parts by mass of TriEG.

The results of measurement for (1) to (8) for the hollow fiber membrane obtained in Comparative Example 3 are shown in Table 1.

For the hollow fiber membrane obtained in Comparative Example 3, the content of the hydrophilic polymer of the membrane was too high, and therefore Flux decrease over time during protein solution filtration in the presence of the contaminant could not be suppressed.

(Comparative Example 4)

A hollow fiber membrane was obtained in the same way as Example 1 except that the dope composition was changed to 27 parts by mass of PES, 7 parts by mass of VA, 31.4 parts by mass of NMP, and 34.6 parts by mass of TriEG.

The results of measurement for (1) to (8) for the hollow fiber membrane obtained in Comparative Example 4 are shown in Table 1.

For the hollow fiber membrane obtained in Comparative Example 4, the content of the hydrophilic polymer of the membrane was too low, and therefore Flux decrease over time occurred.

[Table 1]

| | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|
| Inner diameter of hollow fiber membrane | 201 | 203 | 199 | 201 | 201 | 200 | 198 | 199 | 203 | 202 | 200 | 199 | 201 |
| Membrane thickness | 60 | 61 | 60 | 60 | 59 | 60 | 60 | 61 | 59 | 61 | 61 | 60 | 60 |
| Pure water permeation rate | 187 | 190 | 190 | 245 | 259 | 221 | 181 | 215 | 81 | 190 | 192 | 67 | 230 |
| Inner surface/of membrane | 076 | 0.68 | 0.55 | 0.67 | 0.66 | 0.65 | 0.65 | 0.69 | 0.66 | 0.88 | 0.45 | 0.72 | 0.64 |
| Hydrophilic polymer content | 7.7 | 7.5 | 7.3 | 7.6 | 7.7 | 8.8 | 9.8 | 6.5 | 8.9 | 7.8 | 6.9 | 10.8 | 5.6 |
| Outer surface/of membrane | >1.0 | >1.0 | >1.0 | >1.0 | >1.0 | >1.0 | >1.0 | >1.0 | >1.0 | >1.0 | <1.0 | >1.0 | >1.0 |
| Thickness of dense layer | 4 | 4 | 4 | 2 | 1 | 1 | 4 | 3 | 8 | 4 | 4 | 5 | 2 |
| F60/F20 | 0.7 | 0.75 | 0.69 | 0.63 | 0.61 | 0.62 | 0.63 | 0.65 | 0.66 | 0.57 | 0.54 | 0.58 | 0.47 |
| LRV | 5 | 5 | 5 | 3 | 2 | 2 | 3.5 | 3 | 5 | 4 | 4 | 4.5 | 2.5 |

Industrial Applicability

The filtration membrane of the present embodiment can be widely used for filtration in general.

Particularly, the filtration membrane of the present embodiment can be preferably used when impurities (for example, pathogenic substances such as viruses) are removed from physiologically active substance solutions such as pharmaceuticals and their raw materials, and plasma fractions.

Especially, the filtration membrane of the present embodiment can be preferably used when impurities are removed from a protein solution comprising a contaminant such as an aggregate of a protein.

## Claims

1. A hollow fiber filtration membrane for removing impurities from protein solutions, said hollow fiber filtration membrane comprising a polysulfone-based polymer and a hydrophilic polymer and having a large number of pores, wherein the hollow fiber filtration membrane has a gradient asymmetric porous structure in which an average pore diameter of the pores increases from an outer surface portion toward an inner surface portion of the membrane,
a content of the hydrophilic polymer of the membrane is from 6.0 to 10.0% by mass, and
a ratio between a content of the hydrophilic polymer at the inner surface portion and the content of the hydrophilic polymer of the membrane is in the range of from 0.50 to 0.80,
wherein the content of the hydrophilic polymer in the membrane and the ratio between the content of hydrophilic polymer at the inner surface portion and the content of the hydrophilic polymer of the membrane is determined as described in the description.

2. The hollow fiber filtration membrane according to claim 1, wherein a content of the hydrophilic polymer at the outer surface portion is higher than the content of the hydrophilic polymer of the membrane.

3. The hollow fiber filtration membrane according to claim 1 or 2, wherein the hollow fiber filtration membrane has a pure water permeation rate of from 80 to 240 L/(hr·$m^2$·bar), determined by measuring the amount of pure water at 25°C filtered (L) by constant pressure dead end filtration at 1.0 bar and dividing it by filtration time (hr) and membrane area ($m^2$).

4. The hollow fiber filtration membrane according to any one of claims 1 to 3, wherein the hollow fiber filtration membrane has a dense layer having a thickness of from 2 to 10 $\mu$m, wherein the dense layer is an area having a calculated average pore diameter of 50 nm or less.

5. The hollow fiber filtration membrane according to any one of claims 1 to 4, wherein the polysulfone-based polymer is polyethersulfone.

6. The hollow fiber filtration membrane according to any one of claims 1 to 5, wherein the hydrophilic polymer is a copolymer comprising a vinylpyrrolidone unit.

## Patentansprüche

1. Hohlfaserfiltrationsmembran zur Entfernung von Verunreinigungen aus Proteinlösungen, wobei die Hohlfaserfiltrationsmembran ein Polymer auf Polysulfonbasis und ein hydrophiles Polymer umfasst und eine große Zahl von Poren aufweist, wobei
die Hohlfaserfiltrationsmembran eine asymmetrische poröse Gradientenstruktur aufweist, bei der der mittlere Porendurchmesser der Poren von einem äußeren Oberflächenteil hin zu einem inneren Oberflächenteil der Membran zunimmt;
der Gehalt des hydrophilen Polymers in der Membran 6,0 bis 10,0 Massen-% beträgt; und
das Verhältnis zwischen dem Gehalt des hydrophilen Polymers am inneren Oberflächenteil und dem Gehalt des hydrophilen Polymers in der Membran im Bereich von 0,50 bis 0,80 liegt;
wobei der Gehalt des hydrophilen Polymers in der Membran und das Verhältnis zwischen dem Gehalt des hydrophilen Polymers am inneren Oberflächenteil und dem Gehalt des hydrophilen Polymers in der Membran so bestimmt werden, wie es in der Beschreibung beschrieben ist.

2. Hohlfaserfiltrationsmembran gemäß Anspruch 1, wobei der Gehalt des hydrophilen Polymers am äußeren Oberflächenteil höher ist als der Gehalt des hydrophilen Polymers in der Membran.

3. Hohlfaserfiltrationsmembran gemäß Anspruch 1 oder 2, wobei die Hohlfaserfiltrationsmembran eine Permeationsrate für reines Wasser von 80 bis 240 Liter/(h·$m^2$·bar) aufweist, bestimmt durch Messen der Menge an reinem Wasser bei 25 °C, das durch Dead-End-Filtration unter konstantem Druck von 1,0 bar filtriert wird (Liter), und Dividieren derselben durch die Filtrationszeit (h) und die Membranfläche ($m^2$).

4. Hohlfaserfiltrationsmembran gemäß einem der Ansprüche 1 bis 3, wobei die Hohlfaserfiltrationsmembran eine dichte Schicht mit einer Dicke von 2 bis 10 μm aufweist, wobei die dichte Schicht ein Bereich mit einem berechneten mittleren Porendurchmesser von 50 nm oder weniger ist.

5. Hohlfaserfiltrationsmembran gemäß einem der Ansprüche 1 bis 4, wobei es sich bei dem Polymer auf Polysulfonbasis um Polyethersulfon handelt.

6. Hohlfaserfiltrationsmembran gemäß einem der Ansprüche 1 bis 5, wobei das hydrophile Polymer ein Copolymer ist, das eine Vinylpyrrolidon-Einheit umfasst.

## Revendications

1. Membrane de filtration à fibres creuses pour éliminer des impuretés de solutions de protéines, ladite membrane de filtration à fibres creuses comprenant un polymère à base de polysulfone et un polymère hydrophile et présentant un grand nombre de pores, dans laquelle
la membrane de filtration à fibres creuses présente une structure poreuse asymétrique à gradient dans laquelle un diamètre moyen de pore des pores augmente d'une portion de surface externe vers une portion de surface interne de la membrane,
une teneur du polymère hydrophile de la membrane est de 6,0 à 10,0 % en masse, et
un ratio entre une teneur du polymère hydrophile sur la portion de surface interne et une teneur du polymère hydrophile de la membrane se trouve dans l'intervalle de 0,50 à 0,80,
dans laquelle la teneur du polymère hydrophile dans la membrane et le ratio entre la teneur de polymère hydrophile sur la portion de surface interne et la teneur du polymère hydrophile de la membrane sont déterminés comme décrit dans la description.

2. Membrane de filtration à fibres creuses selon la revendication 1, dans laquelle une teneur du polymère hydrophile sur la portion de surface externe est supérieure à la teneur du polymère hydrophile de la membrane.

3. Membrane de filtration à fibres creuses selon la revendication 1 ou 2, dans laquelle la membrane de filtration à fibres creuses présente un taux de perméation d'eau pure de 80 à 240 L/(h·$m^2$·bar), déterminé en mesurant la quantité d'eau pure à 25°C filtrée (L) par filtration frontale à pression constante à 1,0 bar et en la divisant par la durée de filtration (h) et la surface de membrane ($m^2$).

4. Membrane de filtration à fibres creuses selon l'une quelconque des revendications 1 à 3, dans laquelle la membrane de filtration à fibres creuses présente une couche dense ayant une épaisseur de 2 à 10 μm, dans laquelle la couche dense est une surface présentant un diamètre moyen de pore calculé de 50 nm ou inférieur.

5. Membrane de filtration à fibres creuses selon l'une quelconque des revendications 1 à 4, dans laquelle le polymère à base de polysulfone est une polyéthersulfone.

6. Membrane de filtration à fibres creuses selon l'une quelconque des revendications 1 à 5, dans laquelle le polymère hydrophile est un copolymère comprenant une unité vinylpyrrolidone.

Figure 1

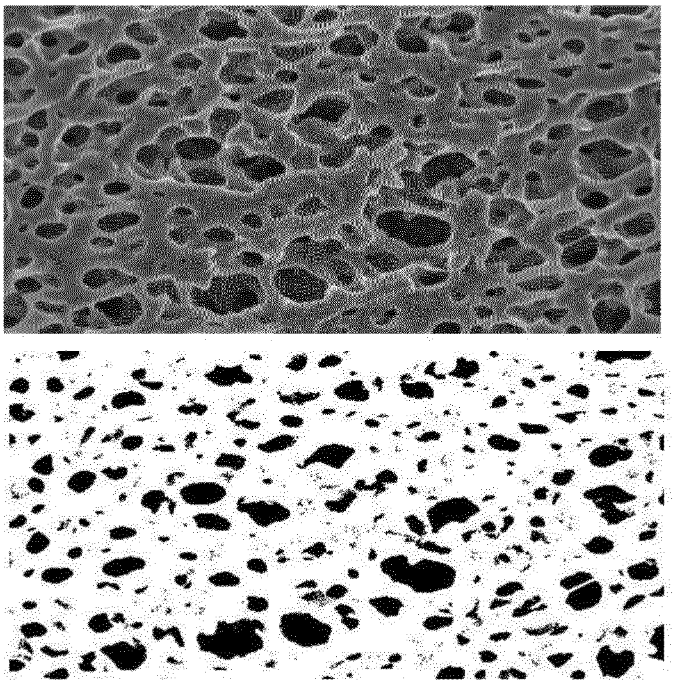

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013012024 A
- JP 4024041 B
- WO 2003026779 A
- WO 2010098867 A
- JP 5403444 B


### Non-patent literature cited in the description


- *Seibutsu-kogaku Kaishi,* vol. 84 (10), 392-394